# EUROPÄISCHE PATENTANMELDUNG

(11) **EP 4 439 692 A1**
(43) Veröffentlichungstag der Anmeldung: **02.10.2024**
(21) Anmeldenummer: 24164016.8
(22) Anmeldetag: 18.03.2024
(51) Int. Cl.: H01M 4/04, H01M 4/139, H01M 4/36, B05C 1/08

(54) **BESCHICHTUNGSVORRICHTUNG, VERFAHREN UND ELEKTRODE**

(30) Priorität: 30.03.2023 DE 102023202931
(71) Anmelder: Volkswagen Aktiengesellschaft, 38440 Wolfsburg (DE)
(72) Erfinder: Bußwinkel, Ludger, 38106 Braunschweig (DE); Schopf, Sven, 38116 Braunschweig (DE); Reuber, Sebastian, 01099 Dresden (DE); Schmidt-Lobach, Roland, 39356 Hörsingen (DE)

(57) **Zusammenfassung**

Die Erfindung betrifft eine Beschichtungsvorrichtung (10) zur Herstellung einer Elektrode (11) mit zumindest einer zweilagigen Pulverschicht (12), insbesondere einer zweilagigen Kathodenschicht (13) und/oder Anodenschicht (14), auf einem Substrat (15), insbesondere einen Stromsammler (16), mit einer Zuführeinheit (17) zum Zuführen (110) eines Substrats (15) in einen Anpressspalt (18),
mit einer ersten Dosiereinheit (19) zur Aufnahme eines ersten Pulvers (20) und eines zweiten Pulvers (21) und zum parallelen Befüllen (120) eines ersten Dosierspalts (22) mit dem ersten Pulver (20) und dem zweiten Pulver (21), mit einer Walzeneinrichtung (23), wobei die Walzeneinrichtung (23) eine erste Auftragswalze (24), eine erste Anpresswalzeneinheit (25) und eine zweite Anpresswalzeneinheit (26) aufweist,
wobei der erste Dosierspalt (22) zwischen der ersten Auftragswalze (24) und der ersten Anpresswalzeneinheit (25) vorgesehen ist und wobei der Anpressspalt (18) zwischen der ersten Anpresswalzeneinheit (25) und der zweiten Anpresswalzeneinheit (26) vorgesehen ist,
wobei der erste Dosierspalt (22) zum Auftragen (130) des ersten Pulvers (20) und des zweiten Pulvers (21) als eine erste zumindest zweilagige Schicht (27) auf die erste Anpresswalzeneinheit (25) mittels einer ersten Auftragskraft (FA1) vorgesehen ist, und
wobei der Anpressspalt (18) zum Übertragen (140) der ersten zumindest zweilagigen Schicht (27) von der ersten Anpresswalzeneinheit (25) auf eine erste Seite (28) des zugeführten Substrats (15) mittels einer Anpresskraft (FP) vorgesehen ist.

## Beschreibung

Die Erfindung betrifft eine Beschichtungsvorrichtung zur Herstellung einer Elektrode mit zumindest einer zweilagigen Pulverschicht auf einem Substrat mit den Merkmalen des unabhängigen Patentanspruchs 1, ein Verfahren zur Herstellung einer Elektrode mit zumindest einer zweilagigen Pulverschicht mit den Merkmalen des unabhängigen Patentanspruchs 6 sowie eine Elektrode mit einer zweilagigen Pulverschicht mit den Merkmalen des unabhängigen Patentanspruchs 13.

Bei Versuchen zur lösemittelfreien bzw. trockenen Elektrodenherstellung wurden bisher Elektroden mit einer einlagigen Beschichtung hergestellt. Um die Performance von Batteriezellen zu verbessern, wird bei der konventionellen Elektrodenherstellung der Ansatz verfolgt, Elektroden mit mehrlagigen Beschichtungen (unterschiedliche Zusammensetzung der einzelnen Schichten) herzustellen, da diese eine erhöhte Energiedichte und elektrische Leitfähigkeit aufweisen.

Derzeit werden lösungsmittelfrei hergestellte Elektroden mit einer mehrlagigen Beschichtung oftmals als ein frei stehender Film erzeugt. Dabei werden zwei Pulver in einem Kalanderspalt an einen Stromsammler gepresst.

Allerdings wird weiterhin standardmäßig die Elektrode nass prozessiert und enthält somit Lösungsmittel.

Eine weitere Methode ist das nacheinander Auftragen einzelner Schichten auf die dafür vorgesehenen Seiten eines Substrats. Hierfür können beispielsweise in zwei nacheinander angeordneten Kalanderspalten jeweils die einzelnen Schichten als frei stehender Film aufgetragen und angepresst werden.

Allerdings werden hierbei oft Haftvermittler oder eine gewisse Feuchtigkeit des Pulvers benötigt, da sonst ein Haften der jeweiligen Schichten nicht gewährleistet werden kann. Dies kann zu einem nicht durchgehend beschichteten Substrat bzw. Stromsammler führen. Dies wiederum führt zu einem erhöhten Ausschuss oder einer geringeren elektrischen Leistung einer derart hergestellten Elektrode.

Es ist daher eine Aufgabe der vorliegenden Erfindung, wenigstens einen der voranstehend beschriebenen Nachteile zumindest teilweise zu überwinden. Insbesondere ist es Aufgabe der Erfindung eine Beschichtungsvorrichtung zur Verfügung zu stellen, welche eine trockene Elektrodenherstellung ermöglicht, sodass die elektrische Leitfähigkeit bzw. die Energiedichte der Elektrode erhöht wird. Weiterhin ist es Aufgabe der Erfindung ein Verfahren zur trockenen Elektrodenherstellung und eine derartig hergestellte Elektrode zur Verfügung zu stellen.

Die voranstehende Aufgabe wird gelöst durch eine Beschichtungsvorrichtung mit den Merkmalen des unabhängigen Patentanspruchs 1, durch ein Verfahren mit den Merkmalen des unabhängigen Patentanspruchs 6 sowie durch eine Elektrode mit den Merkmalen des unabhängigen Patentanspruchs 13. Weitere Merkmale und Details der Erfindung ergeben sich aus den Unteransprüchen, der Beschreibung und den Zeichnungen. Dabei gelten Merkmale und Details, die im Zusammenhang mit der erfindungsgemäßen Beschichtungsvorrichtung beschrieben sind, selbstverständlich auch im Zusammenhang mit dem erfindungsgemäßen Verfahren und/oder im Zusammenhang mit der erfindungsgemäßen Elektrode und jeweils umgekehrt, sodass bezüglich der Offenbarung zu den einzelnen Erfindungsaspekten stets wechselseitig Bezug genommen wird bzw. werden kann.

Erfindungsgemäß vorgesehen ist gemäß einem ersten Aspekt der Erfindung eine Beschichtungsvorrichtung zur Herstellung einer Elektrode mit zumindest einer zweilagigen Pulverschicht, insbesondere einer zweilagigen Kathodenschicht und/oder Anodenschicht, auf einem Substrat, insbesondere einen Stromsammler. Die Beschichtungsvorrichtung weist eine Zuführeinheit zum Zuführen eines Substrats in einen Anpressspalt, eine erste Dosiereinheit zur Aufnahme eines ersten Pulvers und eines zweiten Pulvers und zum parallelen Befüllen eines ersten Dosierspalts mit dem ersten Pulver und dem zweiten Pulver und eine Walzeneinrichtung, wobei die Walzeneinrichtung eine erste Auftragswalze, eine erste Anpresswalzeneinheit und eine zweite Anpresswalzeneinheit aufweist, auf. Dabei ist der erste Dosierspalt zwischen der ersten Auftragswalze und der ersten Anpresswalzeneinheit vorgesehen und der Anpressspalt ist zwischen der ersten Anpresswalzeneinheit und der zweiten Anpresswalzeneinheit vorgesehen. Der erste Dosierspalt ist zum Auftragen des ersten Pulvers und des zweiten Pulvers als eine erste, zumindest zweilagige Schicht auf die erste Anpresswalzeneinheit mittels einer ersten Auftragskraft vorgesehen. Der Anpressspalt ist zum Übertragen der ersten zumindest zweilagigen Schicht von der ersten Anpresswalzeneinheit auf eine erste Seite des zugeführten Substrats mittels einer Anpresskraft vorgesehen.

Die Beschichtungsvorrichtung basiert auf einer walzengetragenen Beschichtung, bei der zunächst die zumindest zweilagige Schicht auf eine Walze aufgetragen wird, um dann von der Walze auf das Substrat übertragen bzw. angepresst zu werden. Dies ist besonders vorteilhaft für das Beschichten eines Substrats mit einem lösungsmittelfreien und trockenen Pulvermaterial, sodass sich die Beschichtungsvorrichtung hervorragend für die trockene Elektrodenherstellung eignet.

Die vorliegende erste Anpresswalzeneinheit und die zweite Anpresswalzeneinheit können jeweils eine Anpresswalze aufweisen. Zum Aufbringen der Anpresskraft für den Übertrag der zumindest zweilagigen Schicht rotieren die Anpressspalt bildenden Anpresswalzen der ersten und zweiten Anpresswalzeneinheit mit der gleichen Rotationsgeschwindigkeit gegeneinander, um ein optimales Beschichtungsergebnis zu liefern. Die erste Auftragswalze kann eine geringere Rotationsgeschwindigkeit aufweisen als die mit ihr den Dosierspalt bildende Anpresswalze der ersten Anpresswalzeneinheit, dadurch wird sichergestellt, dass das erste Pulver und das zweite Pulver als erste Schicht auf der ersten Anpresseinheit haften bleibt, um von dieser getragen werden.

Da die erste Dosiereinheit sowohl das erste als auch das zweite Pulver gleichzeitig dosiert, ist ein Auftragen der gewünschten zweilagigen Schicht in einem Anpressvorgang, also einem Durchlauf des Anpressspaltes, möglich. Dabei ist darauf zu achten, dass das erste Pulver und das zweite Pulver nebeneinander eingefüllt werden und sich nur in einem Grenzbereich vermischen. Zur Reduzierung der Durchmischung des ersten Pulvers und des zweiten Pulvers ist es denkbar, dass die erste Dosiereinheit eine erste Kammer für das erste Pulver und eine zweite Kammer für das zweite Pulver aufweist.

Der Mengenanteil des ersten Pulvers und des zweiten Pulvers an der ersten Schicht kann veränderlich sein, um unterschiedliche Schichtdicken zu erzeugen. Hierfür ist es denkbar, dass eine Kontrolleinheit vorgesehen ist, die den Mengenanteil des jeweiligen Pulvers steuert und/oder regelt.

Des Weiteren erhöht sich durch das parallele und gleichzeitige Dosieren bzw. Befüllen des Dosierspalts die Effizienz der Beschichtungsvorrichtung, da nur eine Walzeneinrichtung benötigt wird, um eine zweilagige Pulverschicht auf das Substrat aufzubringen. Durch das gleichzeitige Aufbringen der zweilagigen Pulverschicht wird die Bildung einer Grenzschicht zwischen den beiden Pulverschichten reduziert bzw. verhindert, wodurch die die Haftung und die elektrische Anbindung verbessert wird.

Im Rahmen der Erfindung der Beschichtungsvorrichtung kann es von Vorteil sein, dass eine zweite Dosiereinheit zur Aufnahme eines dritten Pulvers und eines vierten Pulvers und zum parallelen Befüllen eines zweiten Dosierspalts mit dem dritten Pulver und dem vierten Pulver vorgesehen ist und die Walzeneinrichtung zumindest eine zweite Auftragswalze aufweist, wobei der zweite Dosierspalt zwischen der zweiten Auftragswalze und zweiten Anpresswalzeneinheit vorgesehen ist. Dabei ist der zweite Dosierspalt zum Auftragen des dritten Pulvers und des vierten Pulvers als eine zweite zumindest zweilagige Schicht auf die zweite Anpresswalzeneinheit mittels einer zweiten Auftragskraft vorgesehen. Der Anpressspalt zwischen der ersten und der zweiten Anpresswalzeneinheit ist zum Übertragen der zweiten zumindest zweilagigen Schicht von der zweiten Anpresswalzeneinheit auf eine zweite Seite des zugeführten Substrats mittels der Anpresskraft vorgesehen.

Die zweite Auftragswalze kann eine geringere Rotationsgeschwindigkeit aufweisen als die mit ihr den Dosierspalt bildende Anpresswalze der zweiten Anpresswalzeneinheit, dadurch wird sichergestellt, dass das dritte Pulver und das vierte Pulver als zweite Schicht auf der zweiten Anpresseinheit haften bleibt, um von dieser getragen werden.

Da die zweite Dosiereinheit sowohl das dritte als auch das vierte Pulver gleichzeitig dosiert, ist ein Auftragen der gewünschten zweilagigen Schicht in einem Anpressvorgang, also einem Durchlauf des Anpressspaltes, möglich. Dabei ist darauf zu achten, dass das dritte Pulver und das vierte Pulver nebeneinander eingefüllt werden und sich nur in einem Grenzbereich vermischen. Zur Reduzierung der Durchmischung des dritten Pulvers und des vierten Pulvers ist es denkbar, dass die zweite Dosiereinheit eine dritte Kammer für das dritte Pulver und eine vierte Kammer für das vierte Pulver aufweist.

Der Mengenanteil des dritten Pulvers und des vierten Pulvers an der zweiten Schicht kann veränderlich sein, um unterschiedliche Schichtdicken zu erzeugen. Hierfür ist es denkbar, dass die Kontrolleinheit den Mengenanteil des jeweiligen Pulvers steuert und/oder regelt.

Ferner ist denkbar, dass das erste Pulver und das dritte Pulver die gleiche Zusammensetzung aufweisen und/oder dass das zweite Pulver und das vierte Pulver die gleiche Zusammensetzung aufweisen.

Im Rahmen der Erfindung ist es denkbar, dass die erste Anpresswalzeneinheit mindestens eine erste Anpresswalze und mindestens eine zweite Anpresswalze aufweist, wobei zwischen der mindestens einen ersten Anpresswalze und der mindestens einen zweiten Anpresswalze mindestens ein erster Verpressspalt vorgesehen ist. Zusätzlich oder alternativ, weist die zweite Anpresswalzeneinheit mindestens eine dritte Anpresswalze und mindestens eine vierte Anpresswalze auf, wobei zwischen der mindestens einen dritten Anpresswalze und der mindestens einen vierten Anpresswalze mindestens ein zweiter Verpressspalt vorgesehen ist.

Der erste Verpressspalt und/oder der zweite Verpressspalt verpressen die erste Schicht bzw. die zweite Schicht, bevor diese auf das Substrat übertragen wird. Dadurch kann eine dichtere Packung der ersten Schicht und der zweiten Schicht erzeugt werden, wodurch sich die elektrische Leitfähigkeit weiter verbessern kann. Ferner hat ein Verpressspalt den zusätzlichen Effekt, dass sowohl in dem Dosierspalt und dem Anpressspalt weniger Kräfte zum Auftragen bzw. Übertragen wirken müssen, sodass die in den Spalten wirkenden Scherkräfte reduziert werden können. Dies erzeugt einen gleichmäßigen Auftrag und Übertrag und reduziert die Fehlerstellen beim Auftrag bzw. Übertrag.

Hier ist es auch denkbar, dass die erste Anpresswalzeneinheit und/oder die zweite Anpresswalzeneinheit weitere Anpresswalzen und damit einhergehende weitere Verpressspalte aufweist.

Es kann im Rahmen der Erfindung vorgesehen sein, dass die erste Dosiereinheit ein erstes Trennblech zum Trennen des ersten Pulvers und des zweiten Pulvers im Bereich des ersten Dosierspalts aufweist. Zusätzlich oder alternativ, weist die zweite Dosiereinheit ein zweites Trennblech zum Trennen des dritten Pulvers und des vierten Pulvers im Bereich des zweiten Dosierspalts auf.

Das erste Trennblech bzw. das zweite Trennblech ragt dabei in den Bereich des ersten Dosierspalts bzw. des zweiten Dosierspalts rein, ohne den jeweiligen Dosierspalt zu verschließen. Die Trennbleche dienen zur Trennung der einzelnen Pulver bis kurz vor dem Auftrag des Pulvers als erste Schicht oder zweite Schicht. Die Trennbleche führen zu einer verringerten Vermischung im Grenzbereich der ersten Schicht oder zweiten Schicht, dies ist besonders vorteilhaft für die Energiedichte der ersten Schicht bzw. der zweiten Schicht.

Dabei ist es denkbar, dass das erste Trennblech und/oder das zweite Trennblech eine Struktur aufweisen. Diese Struktur kann das jeweilige Pulver durchkämmen, um eventuelle Klumpen aufzulösen, und/oder zu einem besseren Transport in den Dosierspalt führen. Auch ist es denkbar, dass die Trennbleche durch elektrische und/oder pneumatische Anregung in Vibration versetzt werden, wodurch der Transport zusätzlich verbessert werden kann.

Es ist ferner denkbar, dass im Bereich des ersten Dosierspalts ein erstes Abschirmblech im Bereich der ersten Auftragswalze vorgesehen ist und/oder dass ein zweites Abschirmblech im Bereich der ersten Anpresswalzeneinheit vorgesehen ist und/oder dass im Bereich des zweiten Dosierspalts ein drittes Abschirmblech im Bereich der zweiten Auftragswalze vorgesehen ist und/oder dass ein viertes Abschirmblech im Bereich der zweiten Anpresswalzeneinheit vorgesehen ist.

Die Abschirmbleche dienen dazu, dass sich das Pulver nicht schon vor dem Dosierspalt an die erste und/oder zweite Anpresswalzeneinheit anlegt oder an der ersten und/oder zweiten Auftragswalze anhaftet. Gleichzeitig lässt sich durch derartige Abschirmbleche der Pulvereinzug in den ersten Dosierspalt und/oder zweiten Dosierspalt auf einfache Art und Weise steuern. Gleichzeitig ist es denkbar, dass diese eine Struktur aufweisen, um die erste und/oder zweite Auftragswalze und/oder die erste und/oder zweite Anpresswalzeneinheit zu reinigen bzw. von anhaftenden Materialien zu befreien. Dies ermöglicht einen möglichst sauberen Auftrag einer neuen ersten Schicht bzw. zweiten Schicht bzw. einen sauberen Übertrag der ersten und/oder zweiten Schicht auf das Substrat.

Weiterhin ist es bei der Beschichtungsvorrichtung denkbar, dass die erste Auftragswalze und/oder die zweite Auftragswalze und/oder die erste Anpresswalzeneinheit und/oder die zweite Anpresswalzeneinheit temperierbar sind.

Die obenstehende Aufgabe wird ferner gemäß einem zweiten Aspekt der Erfindung gelöst durch ein erfindungsgemäßes Verfahren zur Herstellung einer Elektrode mit zumindest einer zweilagigen Pulverschicht, insbesondere einer zweilagigen Kathodenschicht und/oder Anodenschicht, auf einem Substrat, insbesondere einem Stromsammler, in einer oben beschriebenen Beschichtungsvorrichtung aufweisend die folgenden Schritte:
- Zuführen eines Substrats mittels der Zuführeinheit in den Anpressspalt;
- Paralleles Befüllen des ersten Dosierspalts mit dem ersten Pulver und mit dem zweiten Pulver mittels der ersten Dosiereinheit;
- Auftragen des ersten Pulvers und des zweiten Pulvers als erste zumindest zweilagige Schicht auf die erste Anpresswalzeneinheit in dem ersten Dosierspalt mittels der ersten Auftragskraft;
- Übertragen der ersten zumindest zweilagigen Schicht auf die erste Seite des Substrats in dem ersten Anpressspalt mittels einer Anpresskraft.

Durch das gleichzeitige Auftragen des ersten und zweiten Pulvers als eine erste Schicht auf das Substrat können die jeweils auf die einzelnen Pulver der Schichten aufgeprägten Kräfte reduziert bzw. gleich verteilt werden.

Auch ist es denkbar, dass die zweite Dosiereinheit den zweiten Dosierspalt mit dem dritten Pulver und mit dem vierten Pulver parallel befüllt, wobei das dritte Pulver und das vierte Pulver als zweite zumindest zweilagige Schicht in dem zweiten Dosierspalt mittels der zweiten Auftragskraft auf die zweite Anpresswalzeneinheit aufgetragen werden und dass die zweite zumindest zweilagige Schicht in dem Anpressspalt mittels der Anpresskraft auf die zweite Seite des Substrats übertragen wird.

Mittels der zweiten Dosiereinheit und dem zweiten Dosierspalt lässt sich das Substrat auch auf der zweiten Seite mit einer zumindest zweilagigen Pulverschicht versehen. Dadurch lässt sich im Falle der Elektrodenherstellung in einem Schritt sowohl die Anodenschicht als auch die Kathodenschicht auf das Substrat bzw. den Stromsammler auftragen.

Im Rahmen der Erfindung ist es optional möglich, dass die erste Dosiereinheit den ersten Dosierspalt kontinuierlich befüllt und/oder dass die zweite Dosiereinheit den zweiten Dosierspalt kontinuierlich befüllt.

Dies führt zu einem besonders gleichmäßigen Ergebnis bei der Erzeugung der zumindest zweilagigen Schicht auf der jeweiligen Seite des Substrats.

Ferner kann es im Rahmen der Erfindung vorgesehen sein, dass die erste Dosiereinheit das erste Pulver und das zweite Pulver so dosiert, dass bei der ersten zumindest zweilagigen Schicht in dem Anpressspalt eine erste Schichtdicke von 40 bis 150 µm eingestellt wird, wobei eine erste Schicht aus dem ersten Pulver eine Schichtdicke von 10 bis 70 µm aufweist. Zusätzlich oder alternativ, dosiert die zweite Dosiereinheit das dritte Pulver und das vierte Pulver so, dass bei der zweiten zumindest zweilagigen Schicht in dem Anpressspalt eine zweite Schichtdicke von 40 bis 150 µm eingestellt wird, wobei eine erste Schicht aus dem dritten Pulver eine Schichtdicke von 10 bis 70 µm aufweist.

Diese Schichtdicken bzw. die benötigte Materialmenge wird durch die erste bzw. zweite Dosiereinheit vorgegeben und durch die erste Auftragskraft in dem ersten Dosierspalt bzw. die zweite Auftragskraft in dem zweiten Dosierspalt und durch die Anpresskraft in dem Anpressspalt erzeugt. Dies kann mittels einer Kontrolleinheit gesteuert und/oder geregelt werden.

In Bezug auf die vorliegende Erfindung ist es vorstellbar, dass die erste zumindest zweilagige Schicht in dem mindestens einen ersten Verpressspalt der ersten Anpresswalzeneinheit verpresst wird und/oder dass die zweite zumindest zweilagige Schicht in dem mindestens einen zweiten Verpressspalt der zweiten Anpresswalzeneinheit verpresst wird.

Das Verpressen in dem jeweiligen Verpressspalt führt zu einer Verdichtung der ersten Schicht und/oder zweiten Schicht, um eine dichtere Packung der jeweiligen zumindest zweilagigen Pulverschicht auf der ersten Seite und/oder der zweiten Seite des Substrats zu erzeugen. Dies ermöglicht eine Reduktion der ersten Auftragskraft und/oder der zweiten Auftragskraft und/oder der Anpresskraft.

Ferner ist es vorstellbar, dass die erste Auftragswalze und/oder die zweite Auftragswalze und/oder die erste Anpresswalzeneinheit und/oder die zweite Anpresswalzeneinheit auf eine Temperatur zwischen 80°C bis 150°C, insbesondere 100°C bis 120°C, temperiert werden.

Dies ermöglicht einen verbesserten Auftrag des ersten und zweiten Pulvers als erste Schicht auf die erste Anpresswalzeneinheit und/oder des dritten und vierten Pulvers als zweite Schicht auf die zweite Anpresswalzeneinheit. Des Weiteren kann durch die Temperierung der einzelnen Walzen der Übertrag der ersten Schicht auf die erste Seite des Substrats und/oder der zweiten Schicht auf die zweite Seite des Substrats verbessert werden, da die Verbindung der einzelnen Pulver der jeweiligen Schichten durch die Wärme erhöht wird.

Denkbar ist dabei auch, dass die Zuführeinheit temperiert wird, um das Substrat für den Übertrag, also das Anpressen der ersten Schicht auf die erste Seite des Substrats und/oder zweiten Schicht auf die zweite Seite des Substrats vorzuwärmen.

Im Rahmen der Erfindung kann es von Vorteil sein, dass die erste Anpresswalzeneinheit und die zweite Anpresswalzeneinheit mit der gleichen ersten Rotationsgeschwindigkeit gegeneinander rotieren, wobei das Verhältnis der ersten Rotationsgeschwindigkeit der ersten Anpresswalzeneinheit zu einer zweiten Rotationsgeschwindigkeit der ersten Auftragswalze 10:1 bis 10:4, vorzugsweise 10:1,5 bis 10:3, weiter vorzugsweise 10:2 bis 10:3,ist und/oder das Verhältnis der ersten Rotationsgeschwindigkeit der zweiten Anpresswalzeneinheit zu dritten Rotationsgeschwindigkeit der zweiten Auftragswalze 10:1 bis 10:4, vorzugsweise 10:1,5 bis 10:3, weiter vorzugsweise 10:2 bis 10:3,ist.

Weist die erste Anpresswalzeneinheit die erste und zweite Anpresswalze und/oder die zweite Anpresswalzeneinheit die dritte und vierte Anpresswalze auf, dann gilt die erste Rotationsgeschwindigkeit als Rotationsgeschwindigkeit der ersten Anpresswalze der ersten Anpresswalzeneinheit und der dritten Anpresswalze der zweiten Anpresswalzeneinheit, da diese den Anpressspalt bilden. Dabei können die zweite Anpresswalze und die vierte Anpresswalze jeweils eine von der ersten Rotationsgeschwindigkeit abweichende Rotationsgeschwindigkeit aufweisen.

Dabei hat sich in vorteilhafterweise herausgestellt, dass die Verhältnisse der Rotationsgeschwindigkeiten zu einer erhöhten Stabilität der ersten Schicht bzw. der ersten zumindest zweilagigen Pulverschicht auf dem Stromsammler der Elektrode und/oder der zweiten Schicht bzw. der zweiten zumindest zweilagigen Pulverschicht auf dem Stromsammler der Elektrode führt.

Die obenstehende Aufgabe wird ferner gemäß einem dritten Aspekt der Erfindung gelöst durch eine erfindungsgemäße Elektrode mit einer zweilagigen Pulverschicht, hergestellt mit einer oben beschriebenen Beschichtungsvorrichtung und/oder einem oben beschriebenen Verfahren, wobei das Substrat ein Stromsammler mit einer ersten Seite und einer zweiten Seite ist, wobei die erste zumindest zweilagige Schicht aus dem ersten Pulver und dem zweiten Pulver ist.

Im Rahmen der Erfindung ist es denkbar, dass die zweite zumindest zweilagige Schicht aus dem dritten Pulver und dem vierten Pulver ist.

Die Elektrode kann dabei als Anode, aber auch als Kathode verwendet werden. Hierbei ist es denkbar, dass sich die zweilagige Pulverschicht der Kathode von der zweilagigen Pulverschicht der Anode unterscheidet. Denkbar ist es auch, dass sich der Stromsammler der Anode von dem Stromsammler der Kathode unterscheidet.

Eine derartige Elektrode weist eine optimal verdichtete erste und/oder zweite zumindest zweilagige Schicht auf, wobei die erste und/oder zweite zumindest zweilagige Schicht lösemittelfrei ist. Gleichzeitig weist eine derart hergestellte Elektrode eine hohe elektrische Leitfähigkeit und Energiedichte auf.

Ein besonders gutes Verhältnis aus Materialeinsatz des ersten, zweiten, dritten und vierten Pulvers für die erste und/oder zweite zumindest zweilagige Schicht einer Elektrode, bzw. einer Anode oder Kathode, zu der vorhandenen elektrischen Leitfähigkeit ergibt sich, wenn die erste zumindest zweilagige Schicht und die zweite zumindest zweilagige Schicht eine Schichtdicke zwischen 40 bis 150 µm aufweisen, wobei das erste Pulver der ersten Schicht und das dritte Pulver der dritten Schicht eine Schichtdicke von 10 bis 70 µm aufweisen. Dadurch kann der Materialeinsatz auch kosteneffizient gestaltet werden.

Vorteile, die zu der Beschichtungsvorrichtung gemäß dem ersten Aspekt der Erfindung beschrieben worden sind, gelten ebenso für das Verfahren gemäß dem zweiten Aspekt der Erfindung sowie zu der Elektrode gemäß dem dritten Aspekt Erfindung.

Weitere Vorteile, Merkmale und Einzelheiten der Erfindung ergeben sich aus der nachfolgenden Beschreibung, in der unter Bezugnahme auf die Zeichnungen mehrere Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Dabei ist die Erfindung in den folgenden Figuren gezeigt:
Figur 1 eine schematische Darstellung einer Beschichtungsvorrichtung zum Auftragen und Übertragen einer ersten Schicht;
Figur 2 eine schematische Darstellung einer Beschichtungsvorrichtung zum Auftragen und Übertragen einer ersten und einer zweiten Schicht;
Figur 3 ein Ausschnitt eines ersten Dosierspalts aus Fig.1;
Figur 4 eine schematische Darstellung eines Verfahrens mit einer Beschichtungsvorrichtung gemäß Fig. 1;
Figur 5 eine schematische Darstellung eines Verfahrens mit einer Beschichtungsvorrichtung gemäß Fig. 2;
Figur 6 eine schematische Darstellung einer Elektrode.

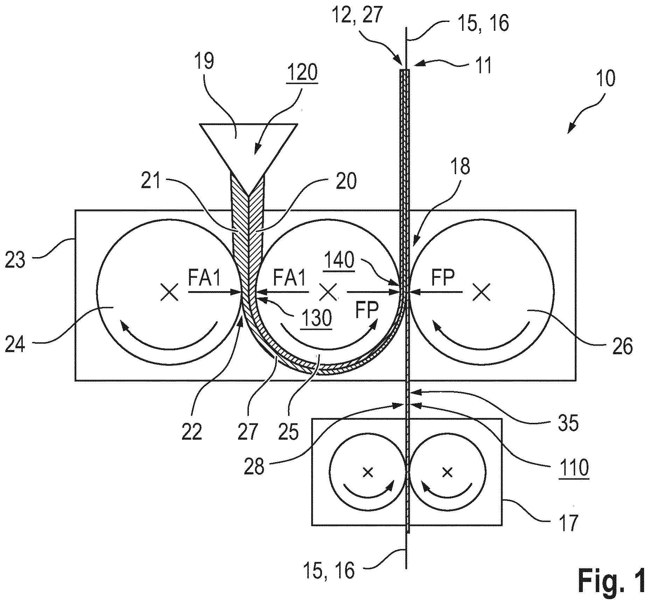

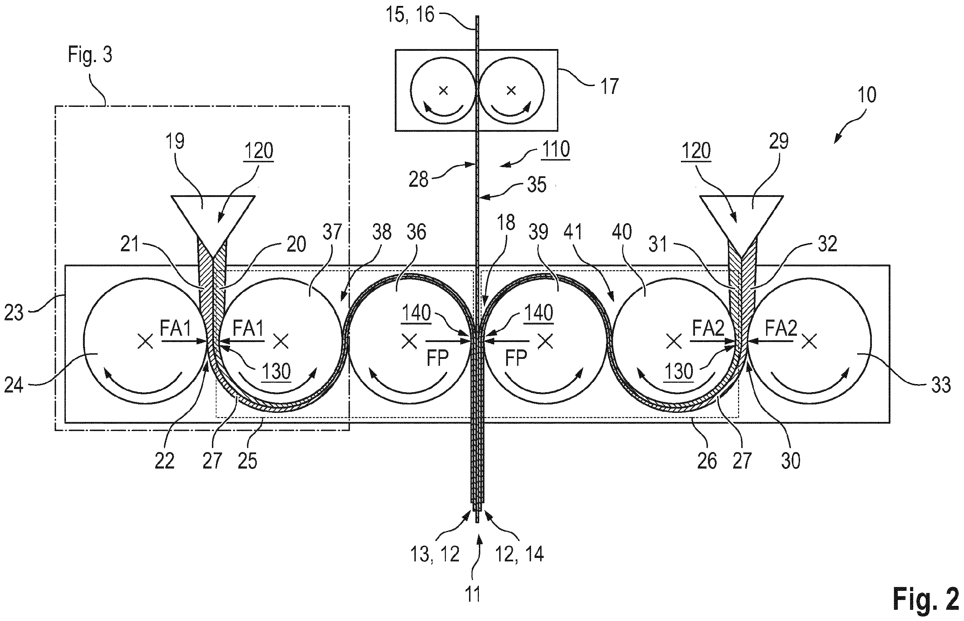

In Fig. 1 und Fig. 2 ist jeweils eine Beschichtungsvorrichtung 10 zur Herstellung einer Elektrode 11 mit zumindest einer zweilagigen Pulverschicht 12, insbesondere einer zweilagigen Kathodenschicht 13 und/oder Anodenschicht 14, auf einem Substrat 15, insbesondere einem Stromsammler 16 dargestellt. Dabei zeigt Fig. 1 eine Beschichtungsvorrichtung 10 zum einseitigen Beschichten eines Substrats 15 durch Auftragen 130 und Übertragen 140 der zumindest einen ersten zweilagigen Pulverschicht 12 und Fig. 2 eine Beschichtungsvorrichtung 10 zum beidseitigen Beschichten eines Substrats 15 durch Auftragen 130 und Übertragen 140 der zumindest einen ersten zweilagigen Pulverschicht 12 - erste zweilagige Schicht 27 - und der zumindest einen zweiten zweilagigen Pulverschicht 12 - zweite zweilagige Schicht 34.

Die Beschichtungsvorrichtung 10 sowohl der Fig. 1 als auch der Fig. 2 weist eine Zuführeinheit 17 zum Zuführen 110 eines Substrats 15 in einen Anpressspalt 18, eine erste Dosiereinheit 19 zur Aufnahme eines ersten Pulvers 20 und eines zweiten Pulvers 21 und zum parallelen Befüllen 120 eines ersten Dosierspalts 22 mit dem ersten Pulver 20 und dem zweiten Pulver 21 und eine Walzeneinrichtung 23, wobei die Walzeneinrichtung 23 eine erste Auftragswalze 24, eine erste Anpresswalzeneinheit 25 und eine zweite Anpresswalzeneinheit 26 aufweist, auf.

Dabei ist der erste Dosierspalt 22 zwischen der ersten Auftragswalze 24 und der ersten Anpresswalzeneinheit 25 vorgesehen und der Anpressspalt 18 ist zwischen der ersten Anpresswalzeneinheit 25 und der zweiten Anpresswalzeneinheit 26 vorgesehen.

Der erste Dosierspalt 22 ist zum Auftragen 130 des ersten Pulvers 20 und des zweiten Pulvers 21 als eine erste zumindest zweilagige Schicht 27 auf die erste Anpresswalzeneinheit 25 mittels einer ersten Auftragskraft FA1 vorgesehen. Der Anpressspalt 18 ist zum Übertragen 140 der ersten zumindest zweilagigen Schicht 27 von der ersten Anpresswalzeneinheit 25 auf eine erste Seite 28 des zugeführten Substrats 15 mittels einer Anpresskraft FP vorgesehen.

Um beidseitig eine zweilagige Pulverschicht 12 auf ein Substrat 15 auftragen 130 zu können, weist die Beschichtungsvorrichtung 10 in Fig. 2 eine zweite Dosiereinheit 29 zur Aufnahme eines dritten Pulvers 31 und eines vierten Pulvers 32 und parallelen Befüllen 120 eines zweiten Dosierspalts 30 mit dem dritten Pulver 31 und dem vierten Pulver 32 auf. Zusätzlich weist die Walzeneinrichtung 23 zumindest eine zweite Auftragswalze 33 auf. Der zweite Dosierspalt 30 ist zwischen der zweiten Auftragswalze 33 und zweiten Anpresswalzeneinheit 26 vorgesehen und der zweite Dosierspalt 30 ist zum Auftragen 130 des dritten Pulvers 31 und des vierten Pulvers 32 als eine zweite zumindest zweilagige Schicht 34 auf die zweite Anpresswalzeneinheit 26 mittels einer zweiten Auftragskraft FA2 vorgesehen. Der Anpressspalt 18 ist in diesem Fall auch zum Übertragen 140 der zweiten zumindest zweilagigen Schicht 34 von der zweiten Anpresswalzeneinheit 26 auf eine zweite Seite 35 des zugeführten Substrats 15 mittels einer Anpresskraft FP vorgesehen.

Wie beispielsweise in Fig. 2 dargestellt, weist die erste Anpresswalzeneinheit 25 mindestens eine erste Anpresswalze 36 und mindestens eine zweite Anpresswalze 37 auf, wobei zwischen der mindestens einen ersten Anpresswalze 36 und der mindestens einen zweiten Anpresswalze 37 mindestens ein erster Verpressspalt 38 vorgesehen ist. Zusätzlich weist die zweite Anpresswalzeneinheit 26 mindestens eine dritte Anpresswalze 39 und mindestens eine vierte Anpresswalze 40 auf, wobei zwischen der mindestens einen dritten Anpresswalze 39 und der mindestens einen vierten Anpresswalze 40 mindestens ein zweiter Verpressspalt 41 vorgesehen ist.

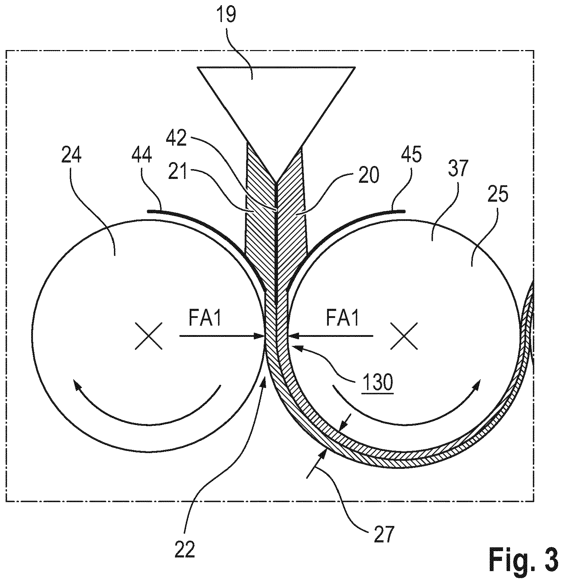

In Fig. 3 ist ein vergrößerter Ausschnitt eines ersten Dosierspalts 22 mit einer ersten Dosiereinheit 19 dargestellt. Hier weist die erste Dosiereinheit 19 ein erstes Trennblech 42 zum Trennen des ersten Pulvers 20 und des zweiten Pulvers 21 im Bereich des ersten Dosierspalts 22 auf. Weitere Trennbleche können analog auch bei der zweiten Dosiereinheit 29 und dem zweiten Dosierspalt 30 vorgesehen sein.

Des Weiteren zeigt der Ausschnitt in Fig. 3, dass im Bereich des ersten Dosierspalts 22 ein erstes Abschirmblech 44 im Bereich der ersten Auftragswalze 24 vorgesehen ist und/oder dass ein zweites Abschirmblech 45 im Bereich der ersten Anpresswalzeneinheit 25 vorgesehen ist. Auch kann analog dazu im Bereich der zweiten Dosiereinheit 29 bzw. des zweiten

Dosierspalts 30 ein drittes Abschirmblech 46 im Bereich der zweiten Auftragswalze 33 und/oder ein viertes Abschirmblech 47 im Bereich der zweiten Anpresswalzeneinheit 26 vorgesehen sein.

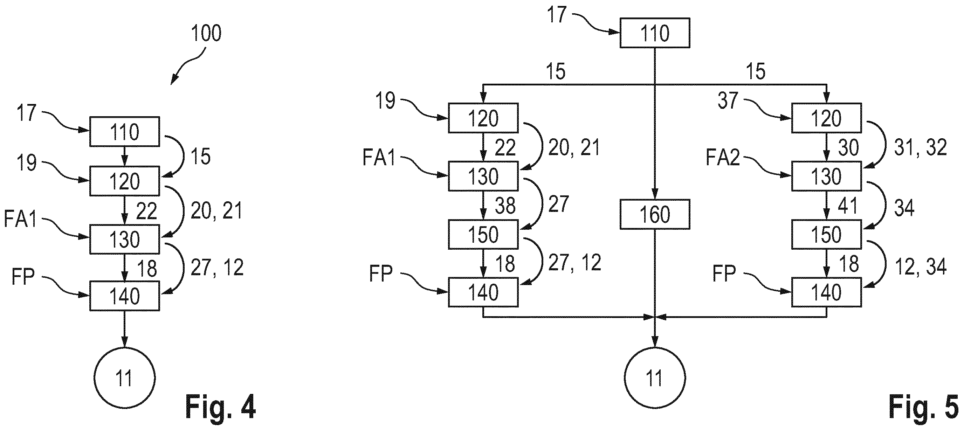

Fig. 4 und Fig. 5 zeigen jeweils schematisch das Verfahren 100 zur Herstellung einer Elektrode 11 mit zumindest einer zweilagigen Pulverschicht 12, insbesondere einer zweilagigen Kathodenschicht 13 und/oder Anodenschicht 14, auf einem Substrat 15, insbesondere einen Stromsammler 16, in einer Beschichtungsvorrichtung 10 gemäß Fig. 1 oder Fig. 2:
- Zuführen 110 eines Substrats 15 mittels der Zuführeinheit 17 in den Anpressspalt 18;
- Paralleles Befüllen 120 des ersten Dosierspalts 22 mit dem ersten Pulver 20 und mit dem zweiten Pulver 21 mittels der ersten Dosiereinheit 19;
- Auftragen 130 des ersten Pulvers 20 und des zweiten Pulvers 21 als erste zumindest zweilagige Schicht 27 auf die erste Anpresswalzeneinheit 25 in dem ersten Dosierspalt 22 mittels der ersten Auftragskraft FA1;
- Übertragen 140 der ersten zumindest zweilagigen Schicht 27 auf die erste Seite 28 des Substrats 15 in dem ersten Anpressspalt 18 mittels einer Anpresskraft FP.

Bei einem Verfahren 100 gemäß Fig. 5, welches in der Beschichtungsvorrichtung 10 gemäß Fig. 2 ausgeführt wird, befüllt 120 die zweite Dosiereinheit 29 den zweiten Dosierspalt 30 parallel mit dem dritten Pulver 31 und mit dem vierten Pulver 32. Dabei werden das dritte Pulver 31 und das vierte Pulver 32 als zweite zumindest zweilagige Schicht 34 in dem zweiten Dosierspalt 30 mittels der zweiten Auftragskraft FA2 auf die zweite Anpresswalzeneinheit 26 aufgetragen 130 und anschließend wird die zweite zumindest zweilagige Schicht 34 in dem Anpressspalt 18 mittels der Anpresskraft FP auf die zweite Seite 35 des Substrats 15 übertragen 140.

Dabei gilt für beide Ausführungsformen der Beschichtungsvorrichtung 10 bzw. des Verfahrens 100, dass die erste Dosiereinheit 19 der Fig. 1 und Fig. 2 bzw. Fig. 4 und Fig. 5 den ersten Dosierspalt 22 kontinuierlich befüllt 120 und, dass die zweite Dosiereinheit 29 der Fig. 2 bzw. Fig. 5 den zweiten Dosierspalt 30 kontinuierlich befüllt 120.

Dabei dosiert die erste Dosiereinheit 19 das erste Pulver 20 und das zweite Pulver 21 so, dass bei der ersten zumindest zweilagigen Schicht 27 im Anpressspalt 18 eine erste Schichtdicke SD1 von 40 bis 150 µm eingestellt wird, wobei eine erste Schicht 48 aus dem ersten Pulver 20 eine Schichtdicke SP1 von 10 bis 70 µm aufweist. Gleiches gilt auch für die zweite Dosiereinheit 29, auch diese dosiert das dritte Pulver 31 und das vierte Pulver 32 so, dass bei der zweiten zumindest zweilagigen Schicht 34 in dem Anpressspalt 18 eine zweite Schichtdicke SD2 von 40 bis 150 µm eingestellt wird, wobei eine dritte Schicht 49 aus dem dritten Pulver 31 eine Schichtdicke SP3 von 10 bis 70 µm aufweist.

Die Beschichtungsvorrichtung 10 gemäß Fig. 2 weist, wie oben bereits beschrieben, eine erste Anpresswalze 36 und eine zweite Anpresswalze 37 in der ersten Anpresswalzeneinheit 25 und eine dritte Anpresswalze 39 und eine vierte Anpresswalze 40 in der zweiten Anpresswalzeneinheit 26 auf.

Demnach wird hier die erste zumindest zweilagige Schicht 27 in dem mindestens einen ersten Verpressspalt 38 der ersten Anpresswalzeneinheit 25 und die zweite zumindest zweilagige Schicht 34 in dem mindestens einen zweiten Verpressspalt 41 der zweiten Anpresswalzeneinheit 26 verpresst 150.

Für einen optimalen Auftrag und Übertrag werden in der Beschichtungsvorrichtung 10 gemäß Fig. 2 in dem Verfahren 100 gemäß Fig. 5 die erste Auftragswalze 24 und die zweite Auftragswalze 33 und die erste Anpresswalzeneinheit 25 und die zweite Anpresswalzeneinheit 26 auf eine Temperatur zwischen80°C bis 150°C temperiert 160. Dabei kann jede der Walzen auf eine eigene Temperatur temperiert 160 werden.

In den Verfahren 100 gemäß Fig. 4 und Fig. 5 rotieren die erste Anpresswalzeneinheit 25 und die zweite Anpresswalzeneinheit 26 mit der gleichen ersten Rotationsgeschwindigkeit v1 gegeneinander. Dabei ist das Verhältnis der ersten Rotationsgeschwindigkeit v1 der ersten Anpresswalzeneinheit 25 zu einer zweiten Rotationsgeschwindigkeit v2 der ersten Auftragswalze 24 10:1 bis 10:4. In dem Verfahren 100 gemäß Fig. 5 ist eine zweite Auftragswalze 33 vorgesehen, hier ist das Verhältnis der ersten Rotationsgeschwindigkeit v1 der zweiten Anpresswalzeneinheit 26 zu der dritten Rotationsgeschwindigkeit v3 der zweiten Auftragswalze 33 10:1 bis 10:4.

Allerdings müssen in dem Verfahren 100 gemäß Fig. 5 die zweite Rotationsgeschwindigkeit v2 der ersten Auftragswalze 24 v1 nicht der dritten Rotationsgeschwindigkeit v3 der zweiten Auftragswalze 33 entsprechen. In dem Verfahren 100 gemäß Fig. 5 mit der Beschichtungsvorrichtung 10 gemäß Fig.2 ist die erste Rotationsgeschwindigkeit v1 die Rotationsgeschwindigkeit der ersten Anpresswalze 36 der ersten Anpresswalzeneinheit 25 und der dritten Anpresswalze 39 der zweiten Anpresswalzeneinheit 26, da diese den Anpressspalt 18 bilden. Dabei können die zweite Anpresswalze 37 und die vierte Anpresswalze 40 eine von der ersten Rotationsgeschwindigkeit v1 abweichende Rotationsgeschwindigkeit aufweisen.

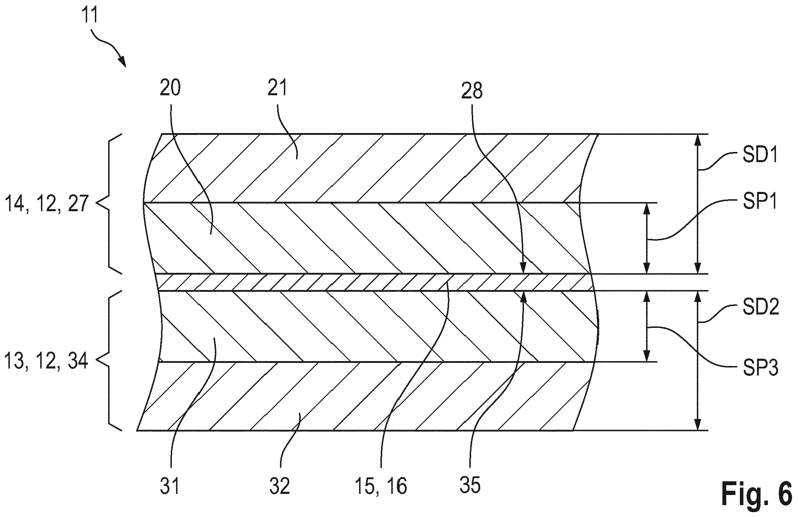

In Fig. 6 ist eine Elektrode 11, wie in einer Beschichtungsvorrichtung 10 gemäß Fig. 2 und dem Verfahren 100 gemäß Fig. 5 hergestellt, dargestellt, die eine erste und eine zweite zweilagige Pulverschicht 12 auf einem Substrat 15 aufweist. Dabei ist das Substrat 15 ein Stromsammler 16 mit einer ersten Seite 28 und einer zweiten Seite 35, wobei die erste zumindest zweilagige Schicht 27, also die erste zweilagige Pulverschicht 12, aus dem ersten Pulver 20 und dem zweiten Pulver 21 ist. Ferner ist die zweite zumindest zweilagige Schicht 34, also die zweite zweilagige Pulverschicht 12, aus dem dritten Pulver 31 und dem vierten Pulver 32.

Dabei weist die Anodenschicht 14 ein erste Schichtdicke SD1 und respektive die Kathodenschicht 13 eine zweite Schichtdicke SD2 eine zwischen 40 bis 150 µm aufweisen, wobei das erste Pulver 20 der ersten Schicht 48 eine erste Schichtdicke SP1 von 10 bis 70 µm und das dritte Pulver 31 der dritten Schicht 49 eine zweite Schichtdicke SP2 von 10 bis 70 µm aufweisen. Dadurch kann der Materialeinsatz auch kosteneffizient gestaltet werden.

### Bezugszeichenliste

- 10: Beschichtungsvorrichtung
- 11: Elektrode
- 12: zweilagige Pulverschicht
- 13: Kathodenschicht
- 14: Anodenschicht
- 15: Substrat
- 16: Stromsammler
- 17: Zuführeinheit
- 18: Anpressspalt
- 19: erste Dosiereinheit
- 20: erstes Pulver
- 21: zweites Pulver
- 22: erster Dosierspalt
- 23: Walzeneinrichtung
- 24: erste Auftragswalze
- 25: erste Anpresswalzeneinheit
- 26: zweite Anpresswalzeneinheit
- 27: erste zweilagige Schicht
- 28: erste Seite
- 29: zweite Dosiereinheit
- 30: zweiter Dosierspalt
- 31: drittes Pulver
- 32: viertes Pulver
- 33: zweite Auftragswalze
- 34: zweite zweilagige Schicht
- 35: zweite Seite
- 36: erste Anpresswalze
- 37: zweite Anpresswalze
- 38: erster Verpressspalt
- 39: dritte Anpresswalze
- 40: vierte Anpresswalze
- 41: zweiter Verpressspalt
- 42: erstes Trennblech
- 43: zweites Trennblech
- 44: erstes Abschirmblech
- 45: zweites Abschirmblech
- 46: drittes Abschirmblech
- 47: viertes Abschirmblech
- 48: erste Schicht
- 49: dritte Schicht

- 100: Verfahren
- 110: Zuführen
- 120: Paralleles Befüllen
- 130: Auftragen
- 140: Übertragen
- 150: Verpressen
- 160: Temperieren

- FA1: erste Auftragskraft
- FP: Anpresskraft
- FA2: zweite Auftragskraft
- SD1: erste Schichtdicke
- SD2: zweite Schichtdicke
- SP1: Schichtdicke der ersten Schicht
- SP3: Schichtdicke der dritte Schicht

- v1: erste Rotationsgeschwindigkeit
- v2: zweite Rotationsgeschwindigkeit
- v3: dritte Rotationsgeschwindigkeit

## Patentansprüche

1. Beschichtungsvorrichtung (10) zur Herstellung einer Elektrode (11) mit zumindest einer zweilagigen Pulverschicht (12), insbesondere einer zweilagigen Kathodenschicht (13) und/oder Anodenschicht (14), auf einem Substrat (15), insbesondere einen Stromsammler (16), mit einer Zuführeinheit (17) zum Zuführen (110) eines Substrats (15) in einen Anpressspalt (18),
mit einer ersten Dosiereinheit (19) zur Aufnahme eines ersten Pulvers (20) und eines zweiten Pulvers (21) und zum parallelen Befüllen (120) eines ersten Dosierspalts (22) mit dem ersten Pulver (20) und dem zweiten Pulver (21), mit einer Walzeneinrichtung (23), wobei die Walzeneinrichtung (23) eine erste Auftragswalze (24), eine erste Anpresswalzeneinheit (25) und eine zweite Anpresswalzeneinheit (26) aufweist,
wobei der erste Dosierspalt (22) zwischen der ersten Auftragswalze (24) und der ersten Anpresswalzeneinheit (25) vorgesehen ist und wobei der Anpressspalt (18) zwischen der ersten Anpresswalzeneinheit (25) und der zweiten Anpresswalzeneinheit (26) vorgesehen ist,
wobei der erste Dosierspalt (22) zum Auftragen (130) des ersten Pulvers (20) und des zweiten Pulvers (21) als eine erste zumindest zweilagige Schicht (27) auf die erste Anpresswalzeneinheit (25) mittels einer ersten Auftragskraft (FA1) vorgesehen ist, und wobei der Anpressspalt (18) zum Übertragen (140) der ersten zumindest zweilagigen Schicht (27) von der ersten Anpresswalzeneinheit (25) auf eine erste Seite (28) des zugeführten Substrats (15) mittels einer Anpresskraft (FP) vorgesehen ist.

2. Beschichtungsvorrichtung (10) nach Anspruch 1,
**dadurch gekennzeichnet,**
**dass** eine zweite Dosiereinheit (29) zur Aufnahme eines dritten Pulvers (31) und eines vierten Pulvers (32) und zum parallelen Befüllen (120) eines zweiten Dosierspalts (30) mit dem dritten Pulver (31) und dem vierten Pulver (32) vorgesehen ist, und dass die Walzeneinrichtung (23) zumindest eine zweite Auftragswalze (33) aufweist,
wobei der zweite Dosierspalt (30) zwischen der zweiten Auftragswalze (33) und zweiten Anpresswalzeneinheit (26) vorgesehen ist, wobei der zweite Dosierspalt (30) zum Auftragen (130) des dritten Pulvers (31) und des vierten Pulvers (32) als eine zweite zumindest zweilagige Schicht (34) auf die zweite Anpresswalzeneinheit (26) mittels einer zweiten Auftragskraft (FA2) vorgesehen ist, wobei der Anpressspalt (18) zum Übertragen (140) der zweiten zumindest zweilagigen Schicht (34) von der zweiten Anpresswalzeneinheit (26) auf eine zweite Seite (35) des zugeführten Substrats (15) mittels einer Anpresskraft (FP) vorgesehen ist.

3. Beschichtungsvorrichtung (10) nach Anspruch 1 oder 2,
**dadurch gekennzeichnet,**
**dass** die erste Anpresswalzeneinheit (25) mindestens eine erste Anpresswalze (36) und mindestens eine zweite Anpresswalze (37) aufweist, wobei zwischen der mindestens einen ersten Anpresswalze (36) und der mindestens einen zweiten Anpresswalze (37) mindestens ein erster Verpressspalt (38) vorgesehen ist, und/oder dass die zweite Anpresswalzeneinheit (26) mindestens eine dritte Anpresswalze (39) und mindestens eine vierte Anpresswalze (40) aufweist, wobei zwischen der mindestens einen dritten Anpresswalze (39) und der mindestens einen vierten Anpresswalze (40) mindestens ein zweiter Verpressspalt (41) vorgesehen ist.

4. Beschichtungsvorrichtung (10) nach einem der vorhergehenden Ansprüche,
**dadurch gekennzeichnet,**
**dass** die erste Dosiereinheit (19) ein erstes Trennblech (42) zum Trennen des ersten Pulvers (20) und des zweiten Pulvers (21) im Bereich des ersten Dosierspalts (22) aufweist und/oder
**dass** die zweite Dosiereinheit (29) ein zweites Trennblech (43) zum Trennen des dritten Pulvers (31) und des vierten Pulvers (32) im Bereich des zweiten Dosierspalts (30) aufweist.

5. Beschichtungsvorrichtung (10) nach einem der vorhergehenden Ansprüche,
**dadurch gekennzeichnet,**
**dass** im Bereich des ersten Dosierspalts (22) ein erstes Abschirmblech (44) im Bereich der ersten Auftragswalze (24) vorgesehen ist und/oder ein zweites Abschirmblech (45) im Bereich der ersten Anpresswalzeneinheit (25) vorgesehen ist und/oder dass im Bereich des zweiten Dosierspalts (30) ein drittes Abschirmblech (46) im Bereich der zweiten Auftragswalze (33) vorgesehen ist und/oder ein viertes Abschirmblech (47) im Bereich der zweiten Anpresswalzeneinheit (26) vorgesehen ist.

6. Verfahren (100) zur Herstellung einer Elektrode (11) mit zumindest einer zweilagigen Pulverschicht (12), insbesondere einer zweilagigen Kathodenschicht (13) und/oder Anodenschicht (14), auf einem Substrat (15), insbesondere einen Stromsammler (16), in einer Beschichtungsvorrichtung (10) gemäß einem der vorhergehenden Ansprüche, aufweisend die folgenden Schritte:
- Zuführen (110) eines Substrats (15) mittels der Zuführeinheit (17) in den Anpressspalt (18);
- Paralleles Befüllen (120) des ersten Dosierspalts (22) mit dem ersten Pulver (20) und mit dem zweiten Pulver (21) mittels der ersten Dosiereinheit (19);
- Auftragen (130) des ersten Pulvers (20) und des zweiten Pulvers (21) als erste zumindest zweilagige Schicht (27) auf die erste Anpresswalzeneinheit (25) in dem ersten Dosierspalt (22) mittels der ersten Auftragskraft (FA1);
- Übertragen (140) der ersten zumindest zweilagigen Schicht (27) auf die erste Seite (28) des Substrats (15) in dem ersten Anpressspalt (18) mittels einer Anpresskraft (FP).

7. Verfahren (100) nach Anspruch 6,
**dadurch gekennzeichnet,**
**dass** die zweite Dosiereinheit (29) den zweiten Dosierspalt (30) mit dem dritten Pulver (31) und mit dem vierten Pulver (32) parallel befüllt (120), wobei das dritte Pulver (31) und das vierte Pulver (32) als zweite zumindest zweilagige Schicht (34) in dem zweiten Dosierspalt (30) mittels der zweiten Auftragskraft (FA2) auf die zweite Anpresswalzeneinheit (26) aufgetragen (130) werden und
**dass** die zweite zumindest zweilagige Schicht (34) in dem Anpressspalt (18) mittels der Anpresskraft (FP) auf die zweite Seite (35) des Substrats (15) übertragen (140) wird.

8. Verfahren (100) nach Anspruch 6 oder 7,
**dadurch gekennzeichnet,**
**dass** die erste Dosiereinheit (19) den ersten Dosierspalt (22) kontinuierlich befüllt (120) und/oder dass die zweite Dosiereinheit (29) den zweiten Dosierspalt (30) kontinuierlich befüllt (120).

9. Verfahren (100) nach einem der Ansprüche 6 bis 8,
**dadurch gekennzeichnet,**
**dass** die erste Dosiereinheit (19) das erste Pulver (20) und das zweite Pulver (21) so dosiert, dass bei der ersten zumindest zweilagigen Schicht (27) in dem Anpressspalt (18) eine erste Schichtdicke (SD1) von 40 bis 150 µm eingestellt wird, wobei eine erste Schicht (48) aus dem ersten Pulver (20) eine Schichtdicke (SP1) von 10 bis 70 µm aufweist, und/oder
**dass** die zweite Dosiereinheit (29) das dritte Pulver (31) und das vierte Pulver (32) so dosiert, dass bei der zweiten zumindest zweilagigen Schicht (34) in dem Anpressspalt (18) eine zweite Schichtdicke (SD2) von 40 bis 150 µm eingestellt wird, wobei eine dritte Schicht (49) aus dem dritten Pulver (31) eine Schichtdicke (SP3) von 10 bis 70 µm aufweist.

10. Verfahren (100) nach einem der Ansprüche 6 bis 9,
**dadurch gekennzeichnet,**
**dass** die erste zumindest zweilagige Schicht (27) in dem mindestens einen ersten Verpressspalt (38) der ersten Anpresswalzeneinheit (25) verpresst (150) wird und/oder dass die zweite zumindest zweilagige Schicht (34) in dem mindestens einen zweiten Verpressspalt (41) der zweiten Anpresswalzeneinheit (26) verpresst (150) wird.

11. Verfahren (100) nach einem der Ansprüche 6 bis 10,
**dadurch gekennzeichnet,**
**dass** die erste Auftragswalze (24) und/oder die zweite Auftragswalze (33) und/oder die erste Anpresswalzeneinheit (25) und/oder die zweite Anpresswalzeneinheit (26) auf eine Temperatur zwischen 80°C bis 150°C temperiert (160) werden.

12. Verfahren (100) nach einem der Ansprüche 6 bis 11,
**dadurch gekennzeichnet,**
**dass** die erste Anpresswalzeneinheit (25) und die zweite Anpresswalzeneinheit (26) mit der gleichen ersten Rotationsgeschwindigkeit (v1) gegeneinander rotieren, wobei das Verhältnis der ersten Rotationsgeschwindigkeit (v1) der ersten Anpresswalzeneinheit (25) zu einer zweiten Rotationsgeschwindigkeit (v2) der ersten Auftragswalze (24) 10:1 bis 10:4, vorzugsweise 10:1,5 bis 10:3, weiter vorzugsweise 10:2 bis 10:3ist und/oder das Verhältnis der ersten Rotationsgeschwindigkeit (v1) der zweiten Anpresswalzeneinheit (26) zur dritten Rotationsgeschwindigkeit (v3) der zweiten Auftragswalze (33) 10:1 bis 10:4, vorzugsweise 10:1,5 bis 10:3, weiter vorzugsweise 10:2 bis 10:3ist.

13. Elektrode (11) mit einer zweilagigen Pulverschicht (12) hergestellt mit einer Beschichtungsvorrichtung (10) gemäß den Ansprüchen 1 bis 5 und/oder einem Verfahren (100) gemäß den Ansprüchen 6 bis 12, wobei das Substrat (15) ein Stromsammler (16) mit einer ersten Seite (28) und einer zweiten Seite (35) ist, wobei die erste zumindest zweilagige Schicht (27) aus dem ersten Pulver (20) und dem zweiten Pulver (21) ist.

14. Elektrode (11) nach Anspruch 13,
**dadurch gekennzeichnet,**
**dass** die zweite zumindest zweilagige Schicht (34) aus dem dritten Pulver (31) und dem vierten Pulver (32) ist.
